# EUROPEAN PATENT SPECIFICATION

(11) **EP 3 517 356 B1**
(45) Date of publication and mention of the grant of the patent: **02.09.2020**
(21) Application number: 18153794.5
(22) Date of filing: 29.01.2018
(51) Int. Cl.: B60N 2/20, B60N 2/34, B60N 2/90

(54) **MOTORISED VEHICLE WITH AN AIRBED**
MOTORISIERTES FAHRZEUG MIT EINEM LUFTBETT
VÉHICULE MOTORISÉ COMPORTANT UN MATELAS PNEUMATIQUE

(43) Date of publication of application: 31.07.2019
(73) Proprietor: Ford Global Technologies, LLC, Dearborn, MI 48126 (US)
(72) Inventor: Aydin, Mustafa, Izmit/Kocaeli (TR); Ersoy, Anil Berat, Izmit/Kocaeli (TR); Özdemir, Selim, Kartal/Istanbul (TR); Dedeköy, Sarp, Üsküdar/Istanbul (TR)
(74) Representative: Illing, Rolf

(56) References cited:
- WO-A1-2011/154638
- FR-A- 1 255 187
- US-A- 5 544 373

## Description

The present invention relates in general to motor vehicle seats. The present invention relates more in particular to vehicles with seats allowing a person to sit in an erected position and to lie in a sleeping position.

Trucks having front seats for driving and a separate sleeping compartment are known in the art. However, the sleeping compartment requires extra space.

Motor vehicles with seats which are movable are also known in the art. The front seats can typically be moved forwards, backwards, up, down, and they are typically foldable for allowing the driver to choose a suitable position, but they typically do not allow to be positioned completely horizontally.

Motor vehicles with movable rear seats are also known. As an example, the backrest of the rear seat of a so called "station wagon" is typically foldable between an erected position for allowing passengers to sit, and a folded position for increasing the loading space. The front side of the backrest is typically soft and contains cushions. The back side of the backrest is typically made of metal and is hard. A person considering to sleep in a station wagon would choose to lie on the rear seats, if these are substantially flat.

KR 20040015698 A illustrates in FIG. 2 a vehicle with an inflatable air bed extending from a front side of the backrest, and arranged over the front seat and the back seat in a longitudinal direction of the vehicle.

US 2016/0272092 A1 describes seat units with a seat pan coupled to a seat back, inflatable cushions, inflatable airbags, and a pressure sensor configured to generate a pressure map, and a control unit configured to analyse the pressure map, and adjust a pressure inside the inflatable cushions and/or the inflatable airbags to minimize pressure irregularity.

CN 206264850 U describes a vehicle with a bed body placed on the back seat row.

US 6,135,558 describes a motor vehicle seat including a backrest, a seat cushion and a coupling mechanism. The backrest is foldable between an erected seating position and a folded sleeping position. The seat cushion is movable between a retracted seating position and an extended sleeping position. In the extended position, the seat cushion is substantially horizontally aligned with the backrest in the folded sleeping position.

CN 204124010 U relates to a vehicle-mounted airbed, which comprises a bed body and a column body. After the vehicle-mounted airbed is subjected to air inflation, the airbed can be arranged between the back of a vehicle front seat and the back of the back-row seat. An added safety-buckling seat and safety belt on the back-row seat are matched, and a passenger lying on the vehicle-mounted airbed can be effectively protected.

DE 26 25 277 describes a car seat with adjustable padded back rest having inflatable air cushions which can be manually adjusted by individual ball pumps to change the load area on the spine of the user, thereby providing maximum relief to anyone suffering from spinal disorders. WO-A-2011 /154638 discloses a vehicle according to the preamble of claim 1.

There is always room for improvements or alternatives.

The present invention has the object to provide a motorized vehicle with a sleeping location.

It is a particular object of embodiments of the present invention to provide a motorized vehicle with an airbed.

It is a particular object of embodiments of the present invention to provide a motorized vehicle with an airbed, which does not require additional space.

It is a particular object of embodiments of the present invention to provide a motorized vehicle with an airbed, which is easy to inflate and deflate.

It is a particular object of embodiments of the present invention to provide a motorized vehicle with an airbed, which does not need to be deflated each time it is used.

It is a particular object of embodiments of the present invention to provide a motorized vehicle with an airbed having means for preventing people from inadvertently falling off the airbed.

These objects are achieved by a vehicle having the features of claim 1. Further, particularly advantageous embodiments of the invention are disclosed in the dependent claims.

It should be noted that the individual features listed in the description below can be combined in any technically meaningful way with each other and show further embodiments of the invention. The description of the invention is additionally characterized and specified particularly in connection with the figures.

In an advantageous embodiment, the present invention discloses a vehicle comprising front seats and rear seats, the rear seats having one or more seat cushions and a backrest; the backrest being foldable between an erected, seating position and a folded, sleeping position; the backrest comprises at least one inflatable cushion integrated at a rear side of the backrest for forming an airbed; the at least one inflatable cushion having at least one valve for allowing the at least one inflatable cushion to be inflated and/or deflated.

It is an advantage of providing an airbed because it allows a person to sleep in the vehicle, for example to respect mandatory rest time.

It is an advantage of providing an airbed, which is integrated or incorporated in the backrest, because it does not require a separate component, it does not occupy additional space, and it can be hidden during normal driving.

It is an advantage of providing an airbed rather than a mere foam layer, because it provides a soft surface to lie upon, at a reduced thickness.

According to a further advantageous embodiment of the present invention, the at least one valve is located at a side portion of the backrest.

It is an advantage of locating the valve at a side portion of the backrest, because this allows easy access to the valve, especially when the door of the vehicle is open.

According to a further advantageous embodiment of the present invention, the backrest further comprises a stretchable or elastic fabric.

It is an advantage of providing an elastic fabric, because it hides and protects the inflatable bag or cushion.

It is a further advantage of providing an elastic fabric, because the elastic fabric is capable of expanding when the inflatable bag or cushion is inflated.

It is a further advantage of providing an elastic fabric, because the elastic fabric may help to at least partially squeeze the air out of the airbed, when deflating the deflatable bag or cushion.

According to a further advantageous embodiment of the present invention, the inflatable cushion is located in a plane substantially parallel to the backrest, both in an inflated condition as well as a deflated condition.

It is an advantage of this orientation that the mounting of the inflatable cushion inside the backrest is far easier than an airbed which needs to be unwrapped and extends from the backrest towards the windshield partially over the front seats, in that no unrolling is required, the front seats can stay in their normal driving position, and the risk of damaging the airbed is drastically reduced.

According to a further advantageous embodiment of the present invention, the dimensions of the backrest (in particular its thickness) increase on average by 5 to 20 cm when the inflatable cushion is inflated.

It is an advantage that the dimensions are moderate, so that the amount of air to be inflated is also moderate.

According to a further advantageous embodiment of the present invention, the airbed extends over 90 % to 98 % of the inner width of the vehicle.

With "inner width" is meant the distance between the back doors measured on the inside of the vehicle. It is an advantage of a transverse orientation that the front seats can stay in their normal position, rather than being folded, which takes time, and is inconvenient.

It is an advantage that the airbed extends over at least 90 % because it provides an airbed which is quite large, allowing a relatively large person to be supported over his/her entire length, without having to bend his/her knees.

It is an advantage that the airbed extends over at most 98 %, because this allows to create a backrest with a flat border of a few cm (e.g. 1 to 5 cm) for abutting a mounting structure when in the erected position, so that the risk of damaging the airbed is minimal.

According to a further advantageous embodiment of the present invention, the backrest is mounted such that the backrest can be folded into the erected position even if the inflatable cushion is inflated.

It is a major advantage that this airbed can be instantly created by merely folding the backrest without having to inflate and deflate the inflatable bag(s) or cushion(s).

According to a further advantageous embodiment of the present invention, the one or more valves is/are accommodated in one or more cavities or in one or more hollow compartments arranged at a side of the backrest.

It is an advantage of such arrangement that the risk of inadvertently damaging the valves is drastically reduced or even eliminated.

According to a further advantageous embodiment of the present invention, the backrest further comprises a movable or removable lid for opening and closing said cavity or hollow compartment.

It is an advantage of such a lid that it offers even better protection of the valve(s).

According to a further advantageous embodiment of the present invention, the rear seat further comprises a plurality of headrests which are foldable between an erected seating position and a backwardly folded sleeping position.

It is an advantage if the headrests can be folded backwards, because in that way an upright border or rim can be created, for reducing the risk that a person inadvertently falls during his/her sleep.

Further features and advantages of the present invention will become apparent from the following description of a non-limiting embodiment of the invention which will be explained below with reference to the drawing, wherein:
- FIG. 1: is a perspective side view of a portion of a vehicle according to an embodiment of the present invention. The vehicle comprises front seats and rear seats. The rear seats have a backrest. The backrest is in an erected position in FIG. 1, and comprises an inflatable cushion integrated at the rear side of the backrest for forming an airbed.
- FIG. 2: shows the vehicle of FIG. 1 when the backrest is folded to a sleeping position, but the inflatable cushion is not inflated yet.
- FIG. 3: shows the vehicle of FIG. 2 after the inflatable cushion integrated in the backrest is inflated.
- FIG. 4: shows a portion of FIG. 3 in enlarged view, showing an exemplary arrangement of a valve on the side of the backrest.
- FIG. 5: shows the vehicle of FIG. 3 after the headrest is folded backwards for forming an upright border of the airbed.

In the various figures, equivalent elements with respect to their function are always provided with the same reference numerals so that these elements are usually described only once.

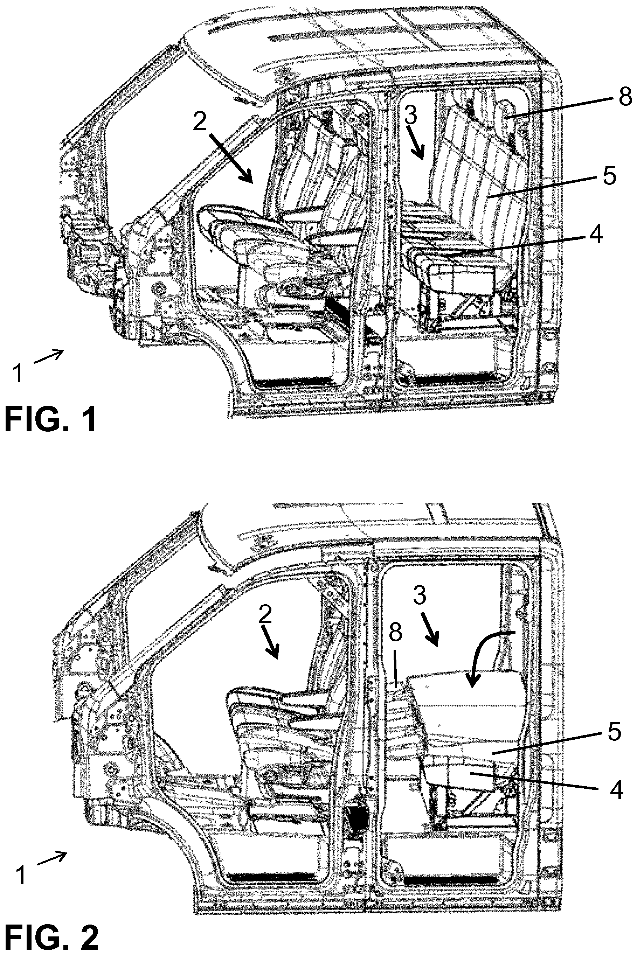

FIG. 1 and FIG. 2 show a perspective side view of a front portion of a vehicle. The vehicle comprises a plurality of front seats 2 and a plurality of rear seats 3. in the specific example shown, the vehicle 1 has three front seats 2 including one driver's seat and two passenger seats, and has four rear seats 3, but the present invention is not limited thereto, and another number of front seats and/or rear seats is also possible. The rear seats 3 have a single backrest 5, which is foldable between an erected seating position (shown in FIG. 1) and a folded, sleeping position (shown in FIG. 2). Alternatively, the backrest 5 may consist of two parts which can be moved individually and extend over substantially half of the width of the vehicle. The backrest 5 comprises an inflatable bag or cushion integrated at the rear side of the backrest 5 for forming an airbed 6.

In FIG. 2 the backrest 5 is folded to the sleeping position, and the inflatable cushion is deflated.

Preferably, the backrest 5 further comprises an elastic fabric for hiding and protecting the inflatable bag or cushion. This elastic fabric is capable of expanding when the inflatable bag or cushion is inflated. The elastic fabric may help to at least partially squeeze the air out of the airbed, when deflating the deflatable bag or cushion before folding the backrest 5 back to its seating position.

Preferably the inflatable cushion is dimensioned such that it expands (on average) at most 20 cm in the height direction of FIG. 2, e.g. at most 15 cm.

Optionally the backrest may further comprise foam filling, preferably located between the inflatable cushion and the elastic fabric.

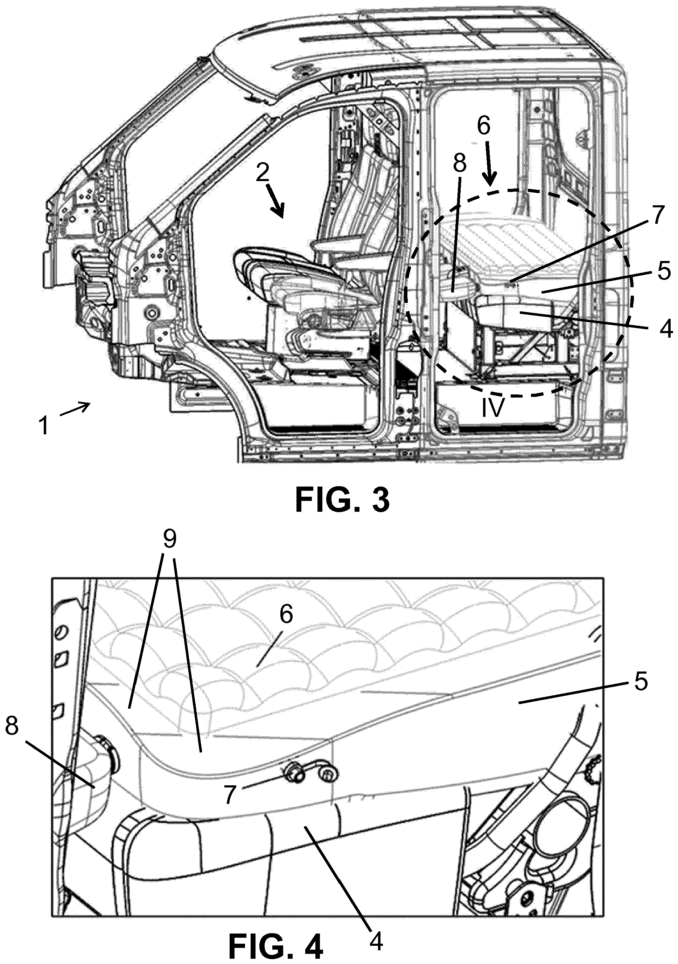

Preferably, the backrest 5 is mounted such that it is not required to deflate the inflatable bag or cushion before bringing the backrest 5 into the erected position. This can be accomplished for example by providing a flat border or rim 9 (FIG. 4) at the backside of the backrest 5, for abutting a corresponding element of the vehicle. This is a huge advantage, because it allows a user to instantly create an airbed by simply folding the backrest, without first having to inflate the inflatable bag or cushion, thereby saving a lot of time.

FIG. 3 shows the vehicle of FIG. 2 after the inflatable bag or cushion of the backrest 5 is inflated. Depending on the specific shape and size and number of compartments of the inflatable bag or cushion, an airbed 6 with a slightly differently top surface may be created. In one example, there is only a single compartment. In another example there are at least two compartments which need to be separately inflated. The latter may offer the advantage that the inflation time may be reduced when two people are each inflating one compartment.

Although not explicitly shown, the inflatable bag or cushion may have a dedicated compartment for the head of the person. This compartment may extend slightly higher than the rest of the airbed, for example by an additional 5 to 10 cm, in order to increase the comfort for a person lying on the airbed.

FIG. 4 shows a portion of FIG. 3 in enlarged view, showing an exemplary arrangement of at least one valve 7 on a side of the backrest 5, in the example shown, on the left side of the vehicle, but that is not absolutely required.

In some embodiments (not shown), the backrest 5 may comprise multiple inflatable bags or cushions which need to be separately inflated, each via their own valve 7. In this case, the valves 7 may all be located on a single side of the backrest 5, or may be located on opposite sides of the backrest. Optionally, some of the valves may be located near the headrest 8.

The one or more valves 7 may simply extend from an outer surface of the backrest 5 (as shown in FIG. 4), or they may be accommodated in a cavity or a hollow compartment (not shown), optionally having a lid (not shown) for closing said cavity or compartment, so as to hide the valve 7, and reducing the risk of damage to the valve.

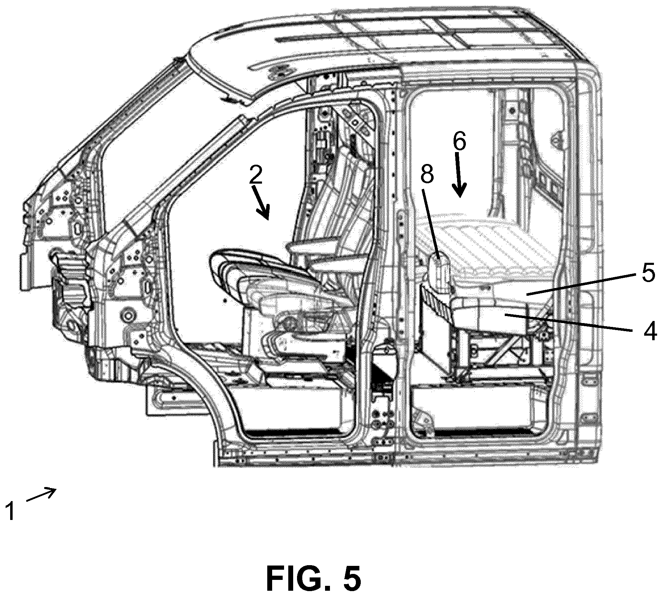

In some embodiments, one or more or all of the headrests 8 may be foldable backwards, as shown in FIG. 5, for creating a small upright border for preventing a person sleeping on the airbed 6 from falling during his/her sleep.

### REFERENCE NUMERALS

- 1: vehicle,
- 2: front seats,
- 3: back seats,
- 4: seat cushions,
- 5: backrest,
- 6: airbed,
- 7: valve,
- 8: headrest,
- 9: flat border

## Claims

1. A vehicle (1) comprising front seats (2) and rear seats (3),
- the rear seats (3) having one or more seat cushions (4) and a backrest (5);
- the backrest (5) being foldable between an erected, seating position and a folded, sleeping position;
**characterised in that**
- the backrest (5) comprises at least one inflatable cushion integrated at a rear side of the backrest for forming an airbed (6);
- the at least one inflatable cushion having at least one valve (7) for allowing the at least one cushion to be inflated and/or deflated.

2. The vehicle (1) of claim 1, **characterised in that** the at least one valve (7) is located at a side portion of the backrest (5).

3. The vehicle (1) of claim 1 or 2, **characterised in that** the backrest (5) further comprises a stretchable or elastic fabric.

4. The vehicle (1) according to any of the previous claims, **characterised in that** the inflatable cushion is located in a plane substantially parallel to the backrest (5), both in an inflated condition as well as a deflated condition.

5. The vehicle (1) of claim 3, **characterised in that** the dimensions of the backrest (5) increase by 5 to 20 cm when the cushion is inflated.

6. The vehicle (1) according to any of the previous claims, **characterised in that** the airbed (6) extends over about 90 % to 98 % of the inner width of the vehicle (1).

7. The vehicle (1) according to any of the previous claims, **characterised in that** the backrest (5) is mounted such that the backrest (5) can be folded into the erected position even if the inflatable cushion is inflated.

8. The vehicle (1) according to any of the previous claims, **characterised in that** the at least one valve (7) is accommodated in a cavity or in a hollow compartment arranged at a side of the backrest (5).

9. The vehicle (1) according to claim 8, **characterised in that** the backrest (5) further comprises a movable or removable lid for opening and closing said cavity or hollow compartment.

10. The vehicle (1) according to any of the previous claims, **characterised in that** the inflatable cushion comprises a single inflatable compartment.

11. The vehicle (1) according to any of the claims 1 to 9, **characterised in that** the inflatable cushion comprises at least two separate inflatable compartments, the first inflatable compartment comprising a first valve located on a first side of the rear seat, the second inflatable compartment comprising a second valve located on a second side of the rear seat, opposite the first side.

12. The vehicle (1) according to any of the previous claims, **characterised in that** the rear seat further comprises a plurality of headrests (8) which are foldable between an erected seating position and a backwardly folded sleeping position.

13. The vehicle (1) according to any of the previous claims, wherein the vehicle (1) is a truck or a van.

## Patentansprüche

1. Fahrzeug (1), umfassend Vordersitze (2) und Rücksitze (3),
- wobei die Rücksitze (3) ein oder mehrere Sitzkissen (4) und eine Rückenlehne (5) aufweisen;
- wobei die Rückenlehne (5) zwischen einer aufgerichteten Sitzposition und einer zusammengeklappten Schlafposition umklappbar ist;
**dadurch gekennzeichnet, dass**
- die Rückenlehne (5) zumindest ein aufblasbares Kissen umfasst, das an einer Rückseite der Rückenlehne integriert ist, um ein Luftbett (6) auszubilden;
- wobei das zumindest eine aufblasbare Kissen zumindest ein Ventil (7) aufweist, um ein Aufblasen oder Ablassen des zumindest einen Kissens zu ermöglichen.

2. Fahrzeug (1) nach Anspruch 1, **dadurch gekennzeichnet, dass** sich das zumindest eine Ventil (7) an einem Seitenabschnitt der Rückenlehne (5) befindet.

3. Fahrzeug (1) nach Anspruch 1 oder 2, **dadurch gekennzeichnet, dass** die Rückenlehne (5) ferner einen dehnbaren oder elastischen Stoff umfasst.

4. Fahrzeug (1) nach einem der vorangehenden Ansprüche, **dadurch gekennzeichnet, dass** sich das aufblasbare Kissen sowohl in einem aufgeblasenen Zustand als auch in einem abgelassenen Zustand in einer zur Rückenlehne (5) im Wesentlichen parallelen Ebene befindet.

5. Fahrzeug (1) nach Anspruch 3, **dadurch gekennzeichnet, dass** die Abmessungen der Rückenlehne (5) um 5 bis 20 cm zunehmen, wenn das Kissen aufgeblasen ist.

6. Fahrzeug (1) nach einem der vorangehenden Ansprüche, **dadurch gekennzeichnet, dass** sich das Luftbett (6) über etwa 90 % bis 98 % der inneren Breite des Fahrzeugs (1) erstreckt.

7. Fahrzeug (1) nach einem der vorangehenden Ansprüche, **dadurch gekennzeichnet, dass** die Rückenlehne (5) so montiert ist, dass die Rückenlehne (5) auch dann in die aufgerichtete Position umgeklappt werden kann, wenn das aufblasbare Kissen aufgeblasen ist.

8. Fahrzeug (1) nach einem der vorangehenden Ansprüche, **dadurch gekennzeichnet, dass** das zumindest eine Ventil (7) in einem Hohlraum oder in einer Hohlkammer, der bzw. die an einer Seite der Rückenlehne (5) angeordnet ist, untergebracht ist.

9. Fahrzeug (1) nach Anspruch 8, **dadurch gekennzeichnet, dass** die Rückenlehne (5) ferner einen beweglichen oder abnehmbaren Deckel zum Öffnen und Schließen des Hohlraums bzw. der Hohlkammer umfasst.

10. Fahrzeug (1) nach einem der vorangehenden Ansprüche, **dadurch gekennzeichnet, dass** das aufblasbare Kissen eine einzelne aufblasbare Kammer umfasst.

11. Fahrzeug (1) nach einem der Ansprüche 1 bis 9, **dadurch gekennzeichnet, dass** das aufblasbare Kissen zumindest zwei separate aufblasbare Kammern umfasst, wobei die erste aufblasbare Kammer ein erstes Ventil umfasst, das sich auf einer ersten Seite des Rücksitzes befindet, wobei die zweite aufblasbare Kammer ein zweites Ventil umfasst, das sich auf einer zweiten Seite des Rücksitzes gegenüber der ersten Seite befindet.

12. Fahrzeug (1) nach einem der vorangehenden Ansprüche, **dadurch gekennzeichnet, dass** der Rücksitz ferner mehrere Kopfstützen (8) umfasst, die zwischen einer aufgerichteten Sitzposition und einer nach hinten zusammengeklappten Schlafposition umklappbar sind.

13. Fahrzeug (1) nach einem der vorangehenden Ansprüche, wobei das Fahrzeug (1) ein Lastkraftwagen oder ein Lieferwagen ist.

## Revendications

1. Véhicule (1) comprenant des sièges avant (2) et des sièges arrière (3),
les sièges arrière (3) comportant un ou plusieurs coussins de siège (4) et un dossier (5) ;
le dossier (5) pouvant être plié entre une position d'assise érigée et une position de repos pliée ;
**caractérisé en ce que**
le dossier (5) comprend au moins un coussin gonflable intégré à un côté arrière du dossier pour former un matelas pneumatique (6) ;
l'au moins un coussin gonflable ayant au moins une valve (7) pour permettre de gonfler et/ou de dégonfler l'au moins un coussin.

2. Véhicule (1) selon la revendication 1, **caractérisé en ce que** l'au moins une valve (7) est située sur une partie latérale du dossier (5).

3. Véhicule (1) selon la revendication 1 ou 2, **caractérisé en ce que** le dossier (5) comprend en outre un tissu étirable ou élastique.

4. Véhicule (1) selon l'une quelconque des revendications précédentes, **caractérisé en ce que** le coussin gonflable est situé dans un plan sensiblement parallèle au dossier (5), dans l'état gonflé comme dans l'état dégonflé.

5. Véhicule (1) selon la revendication 3, **caractérisé en ce que** les dimensions du dossier (5) augmentent de 5 à 20 cm lorsque le coussin est gonflé.

6. Véhicule (1) selon l'une quelconque des revendications précédentes, **caractérisé en ce que** le matelas pneumatique (6) s'étend sur environ 90 % à 98 % de la largeur intérieure du véhicule (1).

7. Véhicule (1) selon l'une quelconque des revendications précédentes, **caractérisé en ce que** le dossier (5) est monté de telle sorte que le dossier (5) peut être plié dans la position érigée même lorsque le coussin gonflable est gonflé.

8. Véhicule (1) selon l'une quelconque des revendications précédentes, **caractérisé en ce que** l'au moins une valve (7) est logée dans une cavité ou dans un compartiment creux disposé sur un côté du dossier (5).

9. Véhicule (1) selon la revendication 8, **caractérisé en ce que** le dossier (5) comprend en outre un couvercle mobile ou amovible pour ouvrir et fermer ladite cavité ou ledit compartiment creux.

10. Véhicule (1) selon l'une quelconque des revendications précédentes, **caractérisé en ce que** le coussin gonflable comprend un unique compartiment gonflable.

11. Véhicule (1) selon l'une quelconque des revendications 1 à 9, **caractérisé en ce que** le coussin gonflable comprend au moins deux compartiments gonflables séparés, le premier compartiment gonflable comprenant une première valve située sur un premier côté du siège arrière, le second compartiment gonflable comprenant une seconde valve située sur un second côté du siège arrière opposé au premier côté.

12. Véhicule (1) selon l'une quelconque des revendications précédentes, **caractérisé en ce que** le siège arrière comprend en outre une pluralité d'appuie-têtes (8) qui peuvent être pliés entre une position d'assise érigée et une position de repos pliée vers l'arrière.

13. Véhicule (1) selon l'une quelconque des revendications précédentes, dans lequel le véhicule (1) est un camion ou un fourgon.
